## Europäisches Patentamt

## European Patent Office

## Office européen des brevets

(19)

(11) Veröffentlichungsnummer: **0 115 309**

**B1**

(12)

# EUROPÄISCHE PATENTSCHRIFT

(45) Veröffentlichungstag der Patentschrift:
18.03.87

(21) Anmeldenummer: **84100615.8**

(22) Anmeldetag: **20.01.84**

(51) Int. Cl.⁴: **A 01 D 75/20,** A 01 D 75/18

(54) Schaltsteuervorrichtung für einen Rasenmäher, dessen Räder durch einen Antriebsmotor angetrieben sind.

(30) Priorität: **26.01.83 DE 3302544**

(43) Veröffentlichungstag der Anmeldung:
**08.08.84 Patentblatt 84/32**

(45) Bekanntmachung des Hinweises auf die Patenterteilung:
**18.03.87 Patentblatt 87/12**

(84) Benannte Vertragsstaaten:
**AT BE CH FR IT LI NL SE**

(56) Entgegenhaltungen:
**DE-A-3 033 346**
**DE-U-8 108 936**
**US-A-4 212 141**
**US-A-4 335 566**

(73) Patentinhaber: **Wolf- Geräte GmbH, Gregor- Wolf-Strasse Postfach 860 und 880, D-5240 Betzdorf/Sieg (DE)**

(72) Erfinder: **Schütz, Eberhard, Betzdorferstrasse 92, D-5244 Daaden (DE)**

(74) Vertreter: **Koch, Günther, Dipl.- Ing., Kaufingerstrasse 8, D-8000 München 2 (DE)**

LIBER, STOCKHOLM 1987

## Beschreibung

Die Erfindung bezieht sich auf eine Schaltsteuervorrichtung für einen Rasenmäher, dessen Räder durch einen Antriebsmotor angetrieben sind und der mittels eines Führungsgriffholms führbar ist, der die Schaltsteuervorrichtung trägt, wobei die Schaltsteuervorrichtung mit einem

- Bereitschaftsschalter, einem Anlaßschalter, der erst durch Betätigung des Bereitschaftsschalters funktionsfähig gemacht wird, und mit einem

- Kupplungsschalter zum Ein- und Ausrücken einer Fahrkupplung versehen ist,

wobei der Kupplungsschalter erst nach Betätigung des Bereitschaftsschalters in die Fahrstellung schaltbar ist, wobei mindestens ein Schalter für dessen Betätigung mit einem im Bereich des Führungsgriffholms schwenkbar gelagerten Schaltbügel versehen ist, der nach Loslassen in seine Ausschaltstellung zurückkehrt, und wobei ein anderer Schalter oder sein Betätigungsmittel räumlich soweit von den Betätigungsmitteln der anderen Schalter entfernt liegt, da59 er nicht zugleich mit einem davon mit einer Hand betätigbar ist.

Die US-A-4 335 566 betrifft eine derartige Schaltvorrichtung, wobei der Antriebsmotor als Brennkraftmaschine ausgebildet ist. Hierbei ist ein Schaltbügel in der Nähe des Führungsgriffholms an Lenkern angelenkt, die ihrerseits an den seitlichen Griffholmen gelenkig befestigt sind. Dabei ist die Anordnung so getroffen, daß der Schaltbügel zunächst um einen begrenzten Betrag von der Neutralstellung in eine erste Stellung überführbar ist, in der ein Mitnehmer an einem Vorsprung des Lenkers anliegt. Begrenzt wird die Schwenkbewegung durch einen gesonderten Steuerhebel, der an einem Anschlag zur Anlage kommt. In dieser ersten Stellung kann die Brennkraftmaschine durch einen elektrischen Anlaßschalter gestartet werden. Hierdurch wird der Messerbalken des Mähers in Drehbewegung versetzt und beim Übergang von der neutralen Stellung in die erste Stellung wird eine Motorbremse gelöst.

Aus der ersten Stellung kann der Schaltbügel nach Entriegelung des Hebels in die zweite Stellung überführt werden, wobei ein Mitnehmer den Lenker dreht, wobei die Fahrkupplung über einen Bowdenzug eingerückt wird.

Der Zweck dieser bekannten Anordnung besteht darin, die gesamte Steuerung von einem Schaltbügel abzuleiten, wobei jedoch außerdem noch die Betätigung eines zweiten Hebels, nämlich des Verriegelungshebels bzw. Entriegelungshebels erforderlich ist.

Die bekannte Schaltsteuervorrichtung ist relativ aufwendig und störanfällig, weil beispielsweise beim Verklemmen der Lenker oder Verschmutzen der Lager die Steuerfunktion beeinträchtigt werden kann. Außerdem kann vor dem Anlassen eingekuppelt werden, wenn der Entriegelungshebel betätigt und der Griffhebel bis zum Anschlag angezogen wird. Schließlich kann bei Blockieren oder verzögerter Bewegung der die Auskuppelbewegung einleitenden Lenker die Bremse bereits einrasten, bevor die Kupplung gelöst ist, wobei dann auch der Motorabschalter wirksam wird.

Der Erfindung liegt die Aufgabe zugrunde, eine gattungsgemäße Schaltsteuervorrichtung derart zu verbessern, daß sie bei Einsatz bei einem Elektrorasenmäher alle zu erwartenden Sicherheitsfunktionen bei einfachem Aufbau zuverlässig erfüllt und eine bequeme Handhabung gewährleistet.

Gelöst wird die gestellte Aufgabe durch die im Kennzeichnungsteil des Patentanspruchs 1 angegebenen Merkmale. Durch die US-A-4 212 141 ist zwar bereits ein Rasenmäher mit Radantrieb bekannt, bei dem getrennt betätigbare Schaltorgane für den Antriebsmotor und die Kupplung vorgesehen sind, und eine Schleppanordnung zwischen Kupplungshebel und Motorschalter vorhanden ist. Dieser bekannte Rasenmäher hat jedoch den Nachteil, daß bei unsachgemäßer Handhabung Störungen oder sogar gefährliche Betriebssituationen auftreten können. Wenn nämlich bei dem bekannten Rasenmäher der Motor mit dem Kupplungsschalter eingeschaltet wird, ergibt sich ein plötzliches ruckartiges Anfahren, was auch zu einem Abwürgen und zu einer Beschädigung des Motors führen kann. Ebenso kann es bei Abschaltung des Motors im gekuppelten Zustand zu einem unerwünschten Nachlauf des Mähers kommen.

Die erfindungsgemäße Schaltsteuervorrichtung schließt derartige Fehlfunktionen aus und gewährleistet, daß eine Schaltfolge nur in vorbestimmten Schritten vorgenommen werden kann, wobei auch dem Sicherheitsbedürfnis voll Rechnung getragen wird.

Zweckmäßige Ausgestaltungen der Erfindung ergeben sich aus den Unteransprüchen.

Nachstehend wird ein Ausführungsbeispiel der Erfindung anhand der Zeichnung beschrieben. In der Zeichnung zeigen:

Fig. 1 eine Ansicht des Griffgestänges eines Elektrorasenmähers von unten her betrachtet;

Fig. 2 eine Ansicht des Griffgestänges gemäß Fig. 1 in Richtung des Pfeiles II betrachtet,

Fig. 3 eine Ansicht des Griffgestänges in Richtung des Pfeiles III betrachtet,

Fig. 4 einen Schnitt nach der Linie IV-IV gemäß Fig. 1.

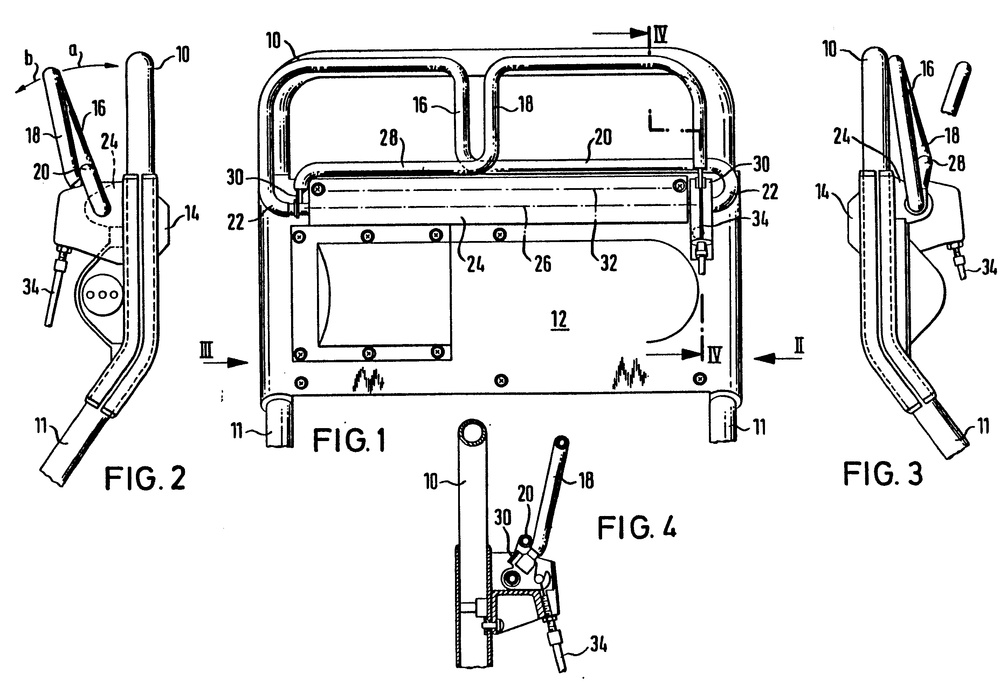

Das Griffgestänge besteht aus dem Griffholm 10, der in die beiden Seitenholme 11 übergeht, zwischen denen eine hohl ausgebildete Traverse 12 angeordnet ist, die nicht dargestellte elektrische Schalter und Verbindungen enthält. Auf der Oberseite der Traverse steht eine Sicherheitstaste 14 vor, die betätigt werden muß, bevor das Motorschaltorgan betätigt werden kann. Dieses Motorschaltorgan weist einen Schaltbügel 16 auf, während das Kupplungsschaltorgan einen daneben angeordneten Schaltbügel 18 aufweist, die jeweils mit einer am Griffholm ruhenden Hand erfaßt und um ihre parallel zueinander liegenden Anlenkachsen 26 bzw. 32 schwenkbar sind. Jeder Schaltbügel nimmt etwa die halbe Breite des Griffholms 10 ein und jeder Schaltbügel 16 bzw. 18 ist mit einer benachbart zu seiner Schwenkachse verlaufenden Verlängerung 20 bzw. 28 versehen. Der Motorschaltbügel 16 bzw. seine Verlängerung 20 sind mit über 90° bzw. 180° verlaufenden Abbiegungen 22 versehen und mit deren Enden in Lagerböcken 24 der Traverse 12 um die Achse 26 schwenkbar gelagert. Die Schwenkbegrenzung und die Schaltbetätigung erfolgt durch innerhalb der Traverse angeordnete, in der Zeichnung nicht dargestellte Elemente. Der Kupplungsschaltbügel 18 ist an seinem dem seitlichen Griffholm 11 benachbarten Ende und mit dem Ende seiner Verlängerung 28 je in einem Lager 30 um die Achse 32 begrenzt schwenkbar. An dem Kupplungsschaltbügel 18 setzt ein Bowdenzug 34 an, der zu der in der Zeichnung nicht dargestellten Fahrkupplung führt. Wie insbesondere aus Fig. 1 ersichtlich, überlappen die Schaltbügel im Mittelabschnitt mit dem der Abbiegung benachbarten Abschnitt der Verlängerung 20 bzw. 28 einander, und zwar derart, daß der Schaltbügel 18 unter dem Schaltbügel 16 liegt. Dies bedeutet, daß der Schaltbügel 16 für den Motorschalter unabhängig von dem Kupplungsschaltbügel betätigt werden kann, während der Kupplungsschaltbügel nur dann betätigbar ist, wenn der Schaltbügel 16 angezogen ist. Ferner wird der Motorschaltbügel 16 durch den Kupplungsschaltbügel 18 in Einschaltstellung gehalten, wenn dieser Kupplungsschaltbügel ein Einkuppeln des Fahrantriebes bewirkt hat.

Die Schaltanordnung arbeitet wie folgt:

Zum Einschalten des Elektroantriebsmotors wird nach Eindrücken der Sicherheitstaste 14 der Schaltbügel 16 in Richtung des Pfeiles "a" bewegt. Kurz vor dem Anschlag an dem Griffholm 10 wird ein in der Traverse integrierter Schalter (nicht dargestellt) betätigt. Die Mechanik ist dabei so ausgelegt, daß ein Öffnen der Hand, d. h. ein kurzer Weg des Bügels 16 zurück in Richtung des Pfeiles "b" den Motor nicht abschaltet. Dieser Effekt soll ein Ermüden der den Holm 10 und den Bügel 16 umschließenden Hand verhindern. Wird der Bügel 16 nicht mehr umfaßt (und ist der Bügel 18 nicht angezogen), bewegt sich der Motoreinschaltbügel unter Federkraft selbsttätig in Richtung "b" bis zum Anschlag und schaltet den Elektromotor ab.

Der Schalter kann alternativ auch extern vorgesehen werden. Beim Wiedereinschalten muß der Tastknopf 14 erneut betätigt werden. Diese Sicherheitsschaltvorrichtung für den Motorantrieb arbeitet prinzipiell in der gleichen Weise wie in der DE-OS 30 33 346 bzw. der Deutschen Gebrauchsmusterschrift 81 08 936 beschrieben. Das heißt, daß der Schaltbügel 16 in Ruhestellung verriegelt ist, daß die Verriegelung durch Betätigung des Sicherheitstasters 14 lösbar ist, daß nach Lösen der Verriegelung der Schaltbügel 16 verschwenkt und dadurch die Einschaltung erfolgen kann, wobei die Verriegelung des Schaltbügels 16 automatisch wieder wirksam wird, sobald der elektrische Schalter nach Loslassen des Schaltbügels 16 einmal geöffnet wurde.

Das Ein- bzw. Zuschalten des Fahrantriebs durch den Kupplungsschaltbügel 18 kann durch die Ausbildung des Kupplungsschaltbügels als Schlepphebel (Überkreuzung der Bügel im mittleren Bereich) nur erfolgen, wenn der Motor eingeschaltet ist, weil sonst die Schwenkbewegung des Kupplungsschaltbügels 18 durch den verriegelten Motorschaltbügel 16 gesperrt ist. Durch nicht dargestellte Mittel ist ferner verhindert, daß nach Drücken des Sicherheitstasters mit der linken Hand der Motorschalter durch den Kupplungsbügel mit der rechten Hand eingeschaltet wird. Liegen beide Schaltbügel 16 und 18 am Griffholm 10 an, dann braucht nur der Kupplungsschaltbügel 18 gehalten zu werden, so daß eine Einhandbedienung möglich wird. Soll der Fahrantrieb beim Einsatz des Rasenmähers in schwierigem Gelände zu- und abgeschaltet wwerden, so ist mit der linken Hand der Bügel 16 am Holm 10 zu halten und der Kupplungsschaltbügel 18 kann unabhängig zwischen Kupplungsstellung und Entkupplungsstellung bewegt werden, so daß ein feinfühliges Arbeiten möglich wird.

Durch die Erfindung wird demgemäß mit Sicherheit vermieden, daß der Motor eingeschaltet wird, während der Fahrantrieb eingekuppelt ist, weil das Einschalten des Motors nicht nur das Ziehen des Bügels 16 erfordert, sondern auch die Betätigung der Taste 14, die so angeordnet ist, daß sie nicht mit der den Schaltbügel 16 betätigenden Hand gedrückt werden kann. Dies erfordert, daß die rechte Hand die Entriegelung durch Drücken der Sicherheitstaste 14 bewirkt, die ebenfalls nicht von der rechten Hand betätigt werden kann, wenn diese den Kupplungsschaltbügel gezogen hat.

Wenn der Rasenmäher mit Einhandbedienung gefahren und nur der Kupplungsschaltbügel 18 mit einer oder beiden Händen erfaßt wird, dann kann in dem angegebenen Sicherheitsschwenkwinkelbereich, in dem der Motor noch angeschaltet bleibt, bereits ein Entkuppeln stattfinden und umgekehrt ebenso ein Wiedereinkuppeln bei noch laufendem Motor. Dagegen wird ein Wiedereinkuppeln nach Abschaltung des Elektromotors verhindert, weil dann erst wieder der Sicherheitstaster 14 gedrückt werden muß.

**Patentansprüche**

1. Schaltsteuervorrichtung für einen Rasenmäher, dessen Räder durch einen Antriebsmotor angetrieben sind und der mittels eines Führungsgriffholms (10) führbar ist, der die Schaltsteuervorrichtung trägt, wobei die Schaltsteuervorrichtung mit einem
- Bereitschaftsschalter (14), einem
- Anlaßschalter (16), der erst durch Betätigung des Bereitschaftsschalters funktionsfähig gemacht wird, und mit einem
- Kupplungsschalter (18) zum Ein- und Ausrücken einer Fahrkupplung versehen ist, wobei der Kupplungsschalter (18) erst nach Betätigung des Bereitschaftsschalters (14) in die Fahrstellung schaltbar ist, wobei mindestens ein Schalter für dessen Betätigung mit einem im Bereich des Führungsgriffholms (10) schwenkbar gelagerten Schaltbügel (16, 18) versehen ist, der nach Loslassen in seine Ausschaltstellung zurückkehrt, und wobei ein anderer Schalter oder sein Betätigungsmittel räumlich soweit von den Betätigungsmitteln der anderen Schalter entfernt liegt, daß er nicht zugleich mit einem davon mit einer Hand betätigbar ist, dadurch gekennzeichnet, daß
- der Bereitschaftsschalter (14) den Anlaßschalter (16) in Ruhestellung mechanisch verriegelt und der Schalter ist, der räumlich soweit vom Anlaßschalter (16) und dem Kupplungsschalter (18) entfernt liegt, daß er nicht zugleich mit einem davon mit einer Hand betätigbar ist,
- der Anlaßschalter als für einen Elektroantriebsmotor versehener Schalter ausgebildet ist, der von einem im Bereich des linken Teils des Griffholms (10) angeordneten Schaltbügel (16) betätigbar ist,
- der Kupplungsschalter in an sich bekannter Weise einen weiteren, im Bereich des rechten Teils des Griffholms angeordneten Schaltbügel (18) aufweist, der den Schaltbügel (16) des Anlaßschalters überlappend als Schleppbügel ausgebildet ist, und
- die beiden Schaltbügel (16 bzw. 18) eine sich von der Mitte nach der gegenüberliegenden Seite erstreckende Verlängerung (20 bzw. 28) aufweisen, deren abgekröpfte Mittelabschnitte einander überlappend und im Bereich der beiden Seitenholme um parallel zueinander liegende Achsen begrenzt schwenkbar gelagert sind.

2. Schaltsteuervorrichtung nach Anspruch 1, dadurch gekennzeichnet, daß der Schaltbügel (16) von der dem Führungsgriffsholm (10) benachbarten Stellung über einen begrenzten Bereich im Einschaltzustand verschwenkbar ist.

3. Schaltsteuervorrichtung nach Anspruch 1, dadurch gekennzeichnet, daß die elektrischen und mechanischen Schaltorgane in einer die beiden Seitenholme des Führungsgriffholms (10) verbindenden Traverse (12) untergebracht sind, und daß innerhalb der Traverse Schwenkbegrenzungsmittel sowie elektrische Schalter und Schaltverbindungen angeordnet sind.

4. Schaltsteuervorrichtung nach Anspruch 3, dadurch gekennzeichnet, daß das Schaltglied des Bereitschaftsschalters (14) auf der Oberseite der Traverse vorsteht.

**Claims**

1. Shift control device for a lawn mower, the wheels of which are driven by a drive motor and which is steerable by means of a guide handle (10) which carries the shift control device, the shift control device being provided with a
- readiness switch (14), a
- starter switch (16) which is rendered functionable only after actuation of the readiness switch and a clutch switch (18) for engaging and disengaging a drive clutch, the clutch switch (18) being shiftable to the drive position only after actuation of the readiness switch (14), at least one switch being provided for the actuation thereof comprising a shift stirrup member (16, 18) which is mounted pivotally in the region of the guide handle (10) and which after release returns to its switch-off position, another switch or its actuating means being spatially remote from the actuating means of the other switches such that it is not actuable simultaneously with one of them by hand, characterized in that
- the readiness switch (14) mechanically locks the starting switch (16) in the rest position and is the switch which is spatially so remote from the starting switch (16) and the clutch switch (18) that it cannot be actuated simultaneously with one of them by hand,
- the starting switch is constructed as switch for an electric drive motor and is actuable by a shift stirrup member (16) disposed in the region of the right portion of the grip handle (10),
- the clutch switch comprises in a manner known per se a further switch stirrup member (18) which is disposed in the region of the right portion of the grip handle and which is constructed as entraining stirrup member overlapping the shift stirrup member (16) of the starting switch, and
- the two shift stirrup members (16 and 18) comprise an extension (20 and 28) which extends from the centre to the opposite side and the bent middle portions of which are mounted overlapping each other and in the region of the two side struts pivotal to a limited extent about axes lying parallel to each other.

2. Shift control device according to claim 1, characterized in that the shift stirrup member (16) is pivotal from the position adjacent the guide handle (10) over a limited region into the switch-on state.

3. Shift control device according to claim 1, characterized in that the electrical and mechanical shift means are accommodated in a crossmember (12) connecting the two side struts of the guide handle (10) and that within the crossmember pivot limiting means and electrical switches and switch connections are disposed.

4. Shift control device according to claim 3, characterized in that the shift member of the readiness switch (14) projects on the top of the crossmember.

**Revendications**

1. Dispositif de commande pour une tondeuse à gazon dont les roues sont entraînées par un moteur d'entraînement et que l'on peut conduire au moyen d'une barre de poignée de guidage (10) qui porte le dispositif de commande, ledit dispositif de commande étant muni
- d'une commande de mise en attente (14),
- d'une commande de démarrage (16), qui ne devient fonctionnelle que lorsque la commande de mise en attente a été actionnée, et
- d'une commande d'embrayage (18) destinée à mettre en prise et hors prise un embrayage de roulement, ladite commande d'embrayage (18) n'étant commutable dans la position de roulement qu'après actionnement de la commande de mise en attente (14), au moins une commande étant munie d'un étrier de commutation pivotable (16, 18) dans la zone de la barre de poignée de guidage (10), ledit étrier (16, 18) retournant dans sa position de déclenchement lorsqu'il a été relâché, et une autre commande ou son moyen d'actionnement étant située à une distance spatiale des moyens d'actionnement des autres commandes telle qu'il est impossible de l'actionner simultanément d'une seule main, caractérisé par le fait que
- la commande de mise en attente (14) bloque mécaniquement en position de repos la commande de démarrage (16) et est située à une distance spatiale telle de la commande de démarrage (16) et de la commande d'embrayage (18) qu'il est impossible de l'actionner simultanément avec une autre commande d'une seule main,
- la commande de démarrage est réalisée sous la forme d'une commande pour un moteur électrique qui peut être actionnée à partir d'un étrier (16) disposé dans la zone de la partie gauche de la barre de poignée (10),
- la commande d'embrayage présente, d'une manière connue en soi un autre étrier de commande (18) disposé dans la zone de la partie droite de la barre de poignée, ledit étrier étant réalisé sous la forme d'un étrier d'entraînement qui chevauche l'étrier (16) de la commande de démarrage et
- les deux étriers (16, 18) présentent un prolongement (20, 28) s'étendant à partir du centre vers le côté opposé, prolongement dont les sections centrales coudées sont disposées de manière à se chevaucher mutuellement et à basculer autour d'axes réciproquement parallèles dans la zone des deux barres latérales.

2. Dispositif de commande selon la revendication 1, caractérisé par le fait qu'à l'état d'enclenchement, l'étrier de commande (16) peut être basculé à l'intérieur d'un champ limité à partir de sa position voisine de la barre de poignée de guidage (10).

3. Dispositif de commande selon la revendication 1, caractérisé par le fait que les organes de commandes électriques et mécaniques sont logés dans une traverse (12) reliant les deux barres latérales de la barre de poignée de guidage (10), et par le fait qu'à l'intérieur de la traverse sont disposés des moyens de limitation basculants ainsi que des interrupteurs électriques et des connexions électriques.

4. Dispositif de commande selon la revendication 3, caractérisé par le fait que l'organe de manoeuvre de la commande de mise en attente (14) fait saillie sur le côté supérieur de la traverse.

FIG. 1

FIG. 2

FIG. 3

FIG. 4